# EUROPEAN PATENT APPLICATION

(11) **EP 4 557 401 A1**
(43) Date of publication of application: **21.05.2025**
(21) Application number: 23838971.2
(22) Date of filing: 12.07.2023
(51) Int. Cl.: H01M 4/525, H01M 4/485, H01M 4/36, H01M 4/04, H01M 4/62, H01M 10/0525

(54) **IRON-BASED LITHIUM SUPPLEMENTING MATERIAL FOR POSITIVE ELECTRODE, AND PREPARATION METHOD THEREFOR AND USE THEREOF**

(30) Priority: 13.07.2022 CN 202210821839
(71) Applicant: Shenzhen Innovazone Technology Co., Ltd., Shenzhen, Guangdong 518000 (CN)
(72) Inventor: WAN, Yuanxin, Shenzhen, Guangdong 518000 (CN); ZHONG, Zeqin, Shenzhen, Guangdong 518000 (CN); KONG, Lingyong, Shenzhen, Guangdong 518000 (CN); ZHAO, Zhongke, Shenzhen, Guangdong 518000 (CN)
(74) Representative: Laine IP Oy
(86) International application number: PCT/CN2023/106941
(87) International publication number: WO 2024/012481

(57) **Abstract**

An iron-based cathode lithium-supplementing material, a preparation method thereof, and an application thereof. The iron-based cathode lithium-supplementing material includes a lithium-rich iron-based core and a passivation layer coated on a surface of the lithium-rich iron-based core. A material of the passivation layer includes LiFeO₂ and Li_{d}MOₑ, d and e satisfy d≥2e-5, and the M is selected from at least one element of Al, Ni, Mn, Co, Ti, Zr, Si, V, Zn, Cr, Cu, and P. LiFeO₂ and Li_{d}MOₑ form a passivation layer on the surface of the lithium-rich iron-based core, and the passivation layer has high density and does not react with water, and can have effect in isolating harmful components, such as water and carbon dioxide, in the air, ensuring the effect of isolating the material from water vapor during storage, and has stable performance, which is conducive to widespread application.

## Description

This application claims the priority of the Chinese patent application submitted to the CNIPA on Jul. 13, 2022, with an application number 202210821839.6 and titled "IRON-BASED CATHODE LITHIUM-SUPPLEMENTING MATERIAL, PREPARATION THEREOF, AND APPLICATION THEREOF", the entire contents of which are incorporated by reference in this application.

### TECHNICAL FIELD

The present application relates to the technical field of battery technology, more particularly to an iron-based cathode lithium-supplementing material, a preparation method thereof, and an application thereof.

### BACKGROUND

The existing cathode and anode materials of lithium-ion batteries have a large irreversible capacity loss in the initial cycle. The cathode material is mainly due to the collapse of the material structure after lithium de-intercalation, and the number of lithium ions that can be accommodated is reduced, resulting in low initial Columbic efficiency. The application of anode materials, especially new anode materials (such as silicon or tin), although the capacity has been greatly improved, the irreversible capacity is as high as 30% or more, which significantly reduces the battery capacity. In order to solve the problem of the initial irreversible capacity loss, researchers have developed a lithium supplement technology, which adds new lithium sources to the electrode material by supplementing lithium to compensate for the loss of active lithium caused by the formation of a solid electrolyte interface (SEI) film in the initial cycle.

Compared with anode lithium supplement, cathode lithium supplement is much simpler, and considering the high safety of actual operation and the compatibility with the existing battery production process, cathode lithium supplement has more industrial application prospects. In the slurry process of lithium battery production, the cathode lithium-supplementing additive and the cathode material can be added at the same time according to the energy density ratio that needs to be increased. In the initial formation stage, the battery is charged to the target voltage so that the lithium ions in the lithium-supplementing additive are fully released to supplement the lithium loss in this process.

At present, the major battery factories, material factories, etc. are mainly based on lithium-rich compounds and binary lithium compounds for cathode lithium-supplementing additive materials. The conventionally used lithium-rich lithium ferrate is extremely unstable and easily reacts with water and CO₂ in the air to form LiOH and Li₂CO₃, which is extremely unfriendly to subsequent processing. Moreover, it is easy to cause gas production and other problems in later batteries. The water absorption rate can be used to feedback that the lithium-rich lithium iron oxide without any modification has an extremely fast water absorption rate, which is not conducive to direct use as a lithium-supplementing material and affects the lithium-supplementing effect.

### TECHNICAL PROBLEMS

It is one of objectives of embodiments of the present application to provide an iron-based cathode lithium-supplementing material, a preparation method thereof, and an application thereof, aiming to solve the problem that the iron-based lithium-supplementing material in the prior art is extremely unstable, easily reacts with water and CO₂ in the air, is extremely unfriendly to subsequent processing, and easily causes gas production in later batteries.

### TECHNICAL SOLUTIONS

The technical solutions adopted in the embodiment of the present application are as follows:

In the first aspect, an iron-based cathode lithium-supplementing material is provided. The iron-based cathode lithium-supplementing material comprises: a lithium-rich iron-based core, and a passivation layer coated on a surface of the lithium-rich iron-based core. A material of the passivation layer comprises LiFeO₂ and Li_{d}MOₑ, in which, d and e satisfy d≥2e-5, and the M is selected from at least one element of Al, Ni, Mn, Co, Ti, Zr, Si, V, Zn, Cr, Cu, and P.

In a second aspect, a preparation method of an iron-based cathode lithium-supplementing material is provided. The preparation method comprises the following steps:
preparing lithium peroxide;
according to a stoichiometric ratio of elements in a structural formula of LiₐFeO_{b}·cMₓO_{y}, evenly mixing an iron source, a lithium source, and a doping metal source to obtain a precursor, in which, in the structural formula, c is a mole number, 4.5≤a≤5.5; a and b satisfy a formula a=2b-3; 1≤y/x≤2.5; and M is selected from at least one element of Al, Ni, Mn, Co, Ti, Zr, Si, V, Zn, Cr, and Cu;
subjecting the precursor to a semi-liquid phase sintering process to obtain a lithium-rich iron-based core; and
mixing the lithium-rich iron-based core with an anhydrous organic solvent, slowly adding an organic metal salt, and preparing a passivation layer by a metal ion extraction method to obtain the iron-based cathode lithium-supplementing material.

In a third aspect, a lithium-rich cathode is provided. The lithium-rich cathode comprises: a cathode current collector, and a cathode active material layer located on the cathode current collector. The cathode active material layer comprises: a lithium-rich cathode active material, a binder, a conductive agent, and an iron-based cathode lithium-supplementing material. The iron-based cathode lithium-supplementing material is selected from the iron-based cathode lithium-supplementing material or is prepared by the preparation of the iron-based cathode lithium-supplementing material.

### BENEFICIAL EFFECTS

Beneficial effects of the iron-based cathode lithium-supplementing material provided in embodiments of the present application are summarized as follows: the iron-based cathode lithium-supplementing material comprises the lithium-rich iron-based core and the passivation layer coated on the surface of the lithium-rich iron-based core. The material of the passivation layer comprises LiFeO₂ and Li_{d}MOₑ, d and e satisfy d≥2e-5, and M is selected from at least one element of Al, Ni, Mn, Co, Ti, Zr, Si, V, Zn, Cr, Cu, and P. Since the material of the passivation layer provided comprises LiFeO₂ and Li_{d}MOₑ, LiFeO₂ and Li_{d}MOₑ form a passivation layer on the surface of the lithium-rich iron-based core.

The beneficial effects of the preparation of the iron-based cathode lithium-supplementing material provided in the embodiment of the present application are summarized as follows: in the preparation method, the lithium-rich iron-based core is first prepared by a semi-liquid phase sintering process, and then a passivation layer is prepared by a metal ion extraction method to obtain an iron-based cathode lithium-supplementing material. The semi-liquid phase sintering process is mainly used to make the lithium source gradually change from a solid to a flowable molten body during the sintering process, so as to directly react with the iron source to achieve a sufficient reaction effect and to solve the problem of Li/Fe mixing uniformity. Moreover, the lithium source comprises lithium peroxide, which makes the lithium source difficult to melt and form a plate-like agglomerated material during the sintering process, thereby solving the problem that the lithium source tends to be sintered to form a plate-like agglomerated material which is difficult to be demolded. In addition, the metal ion extraction method can ensure that the material of the passivation layer comprises LiFeO₂ and Li_{d}MOₑ, ensuring that LiFeO₂ and Li_{d}MOₑ form a passivation layer on the surface of the lithium-rich iron-based core. The formed passivation layer has high density and does not react with water, and can have the effect of isolating harmful components, such as water and carbon dioxide, in the air.

The beneficial effects of the lithium-rich cathode provided in the embodiment of the present application are summarized as follows: the lithium-rich cathode comprises: the cathode current collector, and the cathode active material layer located on the cathode current collector. The cathode active material layer comprises: the lithium-rich cathode active material, the binder, the conductive agent, and the iron-based cathode lithium-supplementing material. The iron-based cathode lithium-supplementing material is selected from the iron-based cathode lithium-supplementing material or is prepared by the preparation method of the iron-based cathode lithium-supplementing material. Since the iron-based cathode lithium-supplementing material can effectively isolate harmful components, such as water and carbon dioxide, in the air, and effectively control the moisture resistance of the iron-based cathode lithium-supplementing material, it is ensured that the obtained lithium-rich cathode has good stability, and after being assembled to form a battery, the lithium-supplementing effect on the cathode of the battery can be achieved.

### DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

It should be noted that when a component is referred to as "fixed on" or "arranged on" another component, it can be directly on the other component or indirectly on the other component. When a component is referred to as "connected to" another component, it can be directly or indirectly connected to the other component. The orientation or position relationship indicated by the terms "upper", "lower", "left", "right", etc. is based on the orientation or position relationship shown in the accompanying drawings, and is only for the convenience of description, rather than indicating or implying that the device or element referred to must have a specific orientation, be constructed and operated in a specific orientation, and therefore cannot be understood as a limitation on the present application. For ordinary technicians in the field, the specific meanings of the above terms can be understood according to the specific circumstances. The terms "first" and "second" are only used for the purpose of convenience of description, and cannot be understood as indicating or implying relative importance or implicitly indicating the number of technical features. The meaning of "multiple" is two or more, unless otherwise clearly and specifically defined.

In order to illustrate the technical solutions provided by the present application, the following is a detailed description in combination with specific drawings and embodiments.

Some embodiments of the present application provide an iron-based cathode lithium-supplementing material. The provided iron-based cathode lithium-supplementing material comprises: a lithium-rich iron-based core, and a passivation layer coated on a surface of the lithium-rich iron-based core; in which, a material of the passivation layer comprises LiFeO₂ and Li_{d}MOₑ, in which, d and e satisfy d≥2e-5, and the M is selected from at least one element of Al, Ni, Mn, Co, Ti, Zr, Si, V, Zn, Cr, Cu, and P. Since the material of the passivation layer provided comprises LiFeO₂ and Li_{d}MOₑ, LiFeO₂ and Li_{d}MOₑ form a passivation layer on the surface of the lithium-rich iron-based core. The passivation layer has high density and does not react with water, and can play a role in isolating harmful components, such as water and carbon dioxide in the air, thereby effectively ensuring the stable performance of the lithium-rich material contained in the cathode composite material layer, ensuring the effect of isolating the iron-based cathode lithium-supplementing material from water vapor during storage, and stable performance, thereby being conducive to widespread application.

In some embodiments, a structural formula of the lithium-rich iron-based core is LiₐFeO_{b}·cMₓO_{y}, in the structural formula, c is a mole number, 4.5≤a≤5.5; a and b satisfy a formula of a=2b-3; 1≤y/x≤2.5; and M is selected from at least one element of Al, Ni, Mn, Co, Ti, Zr, Si, V, Zn, Cr, and Cu.

In some specific embodiments, the specific materials of the lithium-rich iron-based core include but are not limited to Li₅FeO₄·0.01Al₂O₃, Li₅FeO₄·0.005SiO₂, Li₅FeO₄·0.1CuO, and Li₅FeO₄·0.02V₂O₅.

In some embodiments, in the passivation layer, LiFeO₂ and the Li_{d}MOₑ are uniformly mixed to form a passivation layer structure, and the formed passivation layer structure reduces the direct contact between the core material and water vapor and carbon dioxide in the air, thereby playing an effective isolation effect and protecting the stability of the core.

In some embodiments, in the passivation layer, LiFeO₂ forms a first passivation layer coated on the surface of the lithium-rich iron-based core, and Li_{d}MOₑ forms a second passivation layer coated on a surface of the first passivation layer. During the preparation process, the lithium-rich iron-based core LiₐFeO_{b}·cMₓO_{y} is first decomposed to form a LiFeO₂ first passivation layer, and a Li_{d}MOₑ second passivation layer is further prepared by a metal ion extraction method. The double-passivation layer formed reduces the direct contact between the core material and water vapor and carbon dioxide in the air, which plays an effective isolation effect, thereby protecting the stability of the core.

In some embodiments, the iron-based cathode lithium-supplementing material further comprises: an encapsulation layer coated on a surface of the passivation layer. A material of the encapsulation layer comprises a conductive material.

In some embodiments, the conductive material includes but is not limited to a carbon material.

In some embodiments, the conductive material is selected from a semi-finished carbon layer containing hydroxyl groups. On the one hand, the provided encapsulation layer plays an effect of isolating harmful components, such as water and carbon dioxide in the air, thereby effectively ensuring the stability of the lithium-rich material contained in the cathode composite material layer; on the other hand, the encapsulation layer is a semi-finished carbon layer containing hydroxyl groups, which has a partial conductivity function and can improve the conductivity of the cathode lithium-supplementing material. Moreover, the semi-finished carbon layer containing hydroxyl groups has high toughness, which is conducive to fully coating the lithium-rich iron-based core, ensuring the effect of isolating the cathode lithium-supplementing material from water vapor during storage, and stable performance, thereby being conducive to widespread application.

In some embodiments, a structural formula of the semi-finished carbon layer is C_{f}H_{g}(OH)ₕ; in which, 0 < f < 6, 0 < g < 3, and 0 < h < 4. In such condition, the semi-carbonized carbon source retains a small number of hydroxyl bonds, and also has a partial conductivity function. If being completely carbonized, the amorphous carbon formed in such condition is a rigid brittle material, which can be easily destroyed due to mechanical high-speed shearing in the subsequent high-speed fusion process, and it is difficult to provide a good coating effect. The toughness of the semi-carbonized carbon source is just right, which can provide a better coating effect, and improve the conductivity of the material.

In some embodiments, a particle size of the lithium-rich iron-based core is 2 µm to 30 µm. In some specific embodiments, the particle size of the lithium-rich iron-based core is selected from 2 µm, 5 µm, 10 µm, 15 µm, 20 µm, 25 µm, and 30 µm.

In some embodiments, a thickness of the passivation layer is 2 nm to 150 nm. In some specific embodiments, the thickness of the passivation layer is selected from 2 nm, 10 nm, 20 nm, 30 nm, 40 nm, 50 nm, 60 nm, 70 nm, 80 nm, 90 nm, 100 nm, 110 nm, 120 nm, 130 nm, 140 nm, and 150 nm. If the thickness of the passivation layer is too large, the effect of the material on lithium supplementation can be affected. If the thickness of the passivation layer is too small, it cannot be ensured that the core is not affected by water vapor and carbon dioxide.

In some embodiments, a thickness of the encapsulation layer is 2 nm to 150 nm. In some specific embodiments, the thickness of the encapsulation layer is selected from 2 nm, 10 nm, 20 nm, 30 nm, 40 nm, 50 nm, 60 nm, 70 nm, 80 nm, 90 nm, 100 nm, 110 nm, 120 nm, 130 nm, 140 nm, and 150 nm. If the thickness of the encapsulation layer is too large, the lithium-supplementing effect of the material can be affected. If the thickness of the encapsulation layer is too small, it cannot be ensured that the core is not affected by water vapor and carbon dioxide.

In some embodiments, a water absorption rate of the iron-based cathode lithium-supplementing material is 0 ppm/s to 50 ppm/s. By controlling the water absorption rate of the iron-based cathode lithium-supplementing material to be low, it is ensured that the iron-based cathode lithium-supplementing material cannot quickly absorb water vapor in the air, which is conducive to ensuring effective isolation from water vapor and protecting the stability of the core.

In some specific embodiments, the water absorption rate of the iron-based cathode lithium-supplementing material includes but is not limited to 5 ppm/s, 10 ppm/s, 15 ppm/s, 20 ppm/s, 25 ppm/s, 30 ppm/s, 35 ppm/s, 40 ppm/s, 45 ppm/s, and 50 ppm/s.

A second aspect of embodiments of the present application provides a preparation of an iron-based cathode lithium-supplementing material, comprising the following steps:
S01, preparing lithium peroxide;
S02, according to a stoichiometric ratio of elements in a structural formula of LiₐFeO_{b}·cMₓO_{y}, evenly mixing an iron source, a lithium source, and a doping metal source to obtain a precursor, in which, in the structural formula, c is a mole number, 4.5≤a≤5.5; a and b satisfy a formula a=2b-3; 1≤y/x≤2.5; and M is selected from at least one element of Al, Ni, Mn, Co, Ti, Zr, Si, V, Zn, Cr, and Cu;
S03, subjecting the precursor to a semi-liquid phase sintering process to obtain a lithium-rich iron-based core; and
S04, mixing the lithium-rich iron-based core with an anhydrous organic solvent, slowly adding an organic metal salt, and preparing a passivation layer by a metal ion extraction method to obtain the iron-based cathode lithium-supplementing material.

The second aspect of embodiments of the present application provides the preparation method of the iron-based cathode lithium-supplementing material. In the preparation method, the lithium-rich iron-based core is first prepared by a semi-liquid phase sintering process, and then a passivation layer is prepared by a metal ion extraction method to obtain an iron-based cathode lithium-supplementing material. The semi-liquid phase sintering process is mainly used to make the lithium source gradually change from a solid to a flowable molten body during the sintering process, so as to directly react with the iron source to achieve a sufficient reaction effect and to solve the problem of Li/Fe mixing uniformity. Moreover, the lithium source comprises lithium peroxide, which makes the lithium source difficult to melt and form a plate-like agglomerated material during the sintering process, thereby solving the problem that the lithium source tends to be sintered to form a plate-like agglomerated material which is difficult to be demolded. In addition, the metal ion extraction method can ensure that the material of the passivation layer comprises LiFeO₂ and Li_{d}MOₑ, ensuring that LiFeO₂ and Li_{d}MOₑ form a passivation layer on the surface of the lithium-rich iron-based core. The formed passivation layer has high density and does not react with water, and can have the effect of isolating harmful components, such as water and carbon dioxide, in the air. The preparation method is simple and convenient, and is conducive to directly forming a passivation layer on the surface of the core, without generating impurities, thereby being conducive to making the obtained iron-based cathode lithium-supplementing material have high stability and realizing continuous production.

In step S01, lithium peroxide is prepared. The main purpose of providing lithium peroxide is to realize the purpose of prevent melting, to ensure that in the subsequent high-temperature reaction process, the lithium source does not melt to form the plate-like agglomerated material during the high-temperature sintering process, and the hardness of the melt will not be extremely high. Meanwhile, it is ensured that the obtained product is difficult to remove from the sagger due to the hardening.

In some embodiments, the process of preparing lithium peroxide comprises:
S011, providing and mixing anhydrous lithium hydroxide and hydrogen peroxide, and then performing a first heat treatment to obtain a first mixture;
S012, mixing the first mixture with an organic solvent to obtain a lithium peroxide precipitate containing crystal water; and
S013, subjecting lithium peroxide precipitate containing crystal water to a second heat treatment to obtain lithium peroxide.

In S011, anhydrous lithium hydroxide and hydrogen peroxide are provided for mixing, and the molar ratio of anhydrous lithium hydroxide to hydrogen peroxide is (1.1 to 1.2): 1; the molar ratio of the two reactants is controlled so that anhydrous lithium hydroxide and hydrogen peroxide can fully react. In some specific embodiments, the molar ratio of anhydrous lithium hydroxide to hydrogen peroxide is 1.1:1.

In some embodiments, a first heat treatment is performed to obtain a first mixture. The temperature of the first heat treatment is 90°C to 120°C, and a time of the first heat treatment is 15 mins to 60 mins. The first heat treatment is mainly to ensure that the anhydrous lithium hydroxide and hydrogen peroxide react completely.

In some specific embodiments, the temperature of the first heat treatment includes but is not limited to 90°C, 100°C, 110°C, and 120°C. The time of the first heat treatment includes but is not limited to 15 mins, 20 mins, 25 mins, 30 mins, 35 mins, 40 mins, 45 mins, 50 mins, 55 mins, and 60 mins.

In S012, the first mixture and the organic solvent are mixed to obtain a lithium peroxide precipitate containing crystal water. When the organic solvent is added, a lithium peroxide precipitate containing crystal water is precipitated in the first mixture.

In some embodiments, the volume ratio of the organic solvent to hydrogen peroxide is (0.8 to 1.4):1. In some specific embodiments, the volume ratio of the organic solvent to hydrogen peroxide is selected from 0.8:1, 0.9:1, 1:1, 1.1:1, 1.2:1, 1.3:1, and 1.4:1.

In some embodiments, the organic solvent includes but is not limited to anhydrous ethanol. When anhydrous ethanol is mixed with the first mixture, a yield of the precipitated lithium peroxide precipitate containing crystal water is relatively high.

In S013, the lithium peroxide precipitate containing crystal water is subjected to a second heat treatment to obtain lithium peroxide. The second heat treatment is mainly used for high-temperature treatment to remove crystal water.

In some embodiments, a temperature for the second heat treatment is 400°C to 450°C, and a time for the second heat treatment is 1 hr to 5 hrs. Under the treatment temperature conditions, the crystal water can be completely removed, and lithium peroxide without crystal water can be obtained for use.

In some specific embodiments, the temperature of the second heat treatment includes but is not limited to 400°C, 410°C, 420°C, 430°C, 440°C, and 450°C. The time for the second heat treatment includes but is not limited to 1 hr, 2 hrs, 3 hrs, 4 hrs, and 5 hrs.

In step S02, according to the stoichiometric ratio of the elements in structural formula of LiₐFeO_{b}·cMₓO_{y}, the iron source, the lithium source, and the doping metal source are uniformly mixed to obtain a precursor, c in the structural formula is a mole number, and 4.5≤a≤5.5; a and b satisfy a formula a=2b-3; 1≤y/x≤2.5; M is selected from at least one element of Al, Ni, Mn, Co, Ti, Zr, Si, V, Zn, Cr, and Cu.

In some embodiments, the lithium source further comprises at least one of lithium nitrate, lithium carbonate, lithium acetate, lithium oxalate, lithium borate, lithium phosphate, lithium chloride, lithium hydroxide, lithium peroxide, and lithium oxide.

In some embodiments, a mass percentage of lithium peroxide in the lithium source is 30 wt% to 70 wt%. By controlling the mass percentage of lithium peroxide in the lithium source to be 30 wt% to 70 wt%, it can be ensured that the lithium source does not melt to form agglomerated material occurs during sintering.

In some embodiments, the iron source comprises an iron salt.

In some embodiments, the doping element source comprises at least one of an Al source, a Ni source, a Mn source, a Co source, a Ti source, a Zr source, a Si source, a V source, a Zn source, a Cr source, a Cu source, and a P source.

Further, the iron source, lithium source, and doping metal source are mixed evenly to obtain a precursor.

In some embodiments, in the step of mixing the iron source, the lithium source, and doped element source, a high-speed shearing method is used for mixing, and the speed of the high-speed shearing is 2000 rpm to 5000 rpm, and the time is 20 mins to 40 mins. The high-speed shearing method can ensure that the components are mixed evenly.

In some specific embodiments, the speed of the high-speed shearing includes but is not limited to 2000 rpm, 3000 rpm, 4000 rpm, and 5000 rpm. The time of the high-speed shearing includes but is not limited to 20 mins, 30 mins, and 40 mins.

In step S03, the precursor is subjected to a semi-liquid phase sintering process to obtain a lithium-rich iron-based core. The semi-liquid phase sintering process mainly causes the lithium source to gradually change from a solid to a flowable molten body during the high-temperature sintering process, such that the flowable molten body can directly react with the iron source to achieve a sufficient reaction effect.

In some embodiments, the temperature of the semi-liquid phase sintering process is 600°C to 950°C, and the time is 2 hrs to 15 hrs. The semi-liquid phase sintering process can ensure that Li/Fe is mixed evenly and improve the mixing effect of different elements.

In some specific embodiments, the temperature of the semi-liquid phase sintering process includes but is not limited to 600°C, 610°C, 620°C, 630°C, 640°C, 650°C, 660°C, 670°C, 680°C, 690°C, 700°C, 710°C, 720°C, 730°C, 740°C, 750°C, 760°C, 770°C, 780°C, 790°C, 800°C, 810°C, 820°C, 830°C, 840°C, 850°C, 860°C, 870°C, 880°C, 890°C, 900°C, 910°C, 920°C, 930°C, 940°C, and 950°C. The time of semi-liquid phase sintering process includes but is not limited to 2 hrs, 3 hrs, 4 hrs, 5 hrs, 6 hrs, 7 hrs, 8 hrs, 9 hrs, 10 hrs, 11 hrs, 12 hrs, 13 hrs, 14 hrs, and 15 hrs.

In some embodiments, the reaction process of semi-liquid phase sintering process is as follows:

Fe source + Li₂O₂/Li source + doping element M→LiₐFeO_{b}.cMₓO_{y}.

In some embodiments, in the step of semi-liquid phase sintering process, a mullite sagger or a corundum sagger is used to perform the semi-liquid phase sintering process in a roller kiln or a rotary kiln.

In step S04, the lithium-rich iron-based core is mixed with an anhydrous organic solvent, and then an organic metal salt is slowly added, and a passivation layer is prepared by a metal ion extraction method, whereby obtaining an iron-based cathode lithium-supplementing material.

In some embodiments, the anhydrous organic solvent is selected from at least one of anhydrous ethanol, methanol, tetrahydrofuran, N-methylpyrrolidone, and cyclohexane.

In some embodiments, the organic metal salt is selected from at least one of an alkane salt, an acetate salt, a lactate salt, a citrate salt, a tartrate salt, an alcohol salt, and a tetrabutyl titanate salt.

In some specific embodiments, the organic metal salt includes but is not limited to at least one of tributyl aluminum, cobalt acetate, zinc lactate, nickel citrate, and tetrabutyl titanate.

In some embodiments, a molar ratio of the lithium-rich iron-based core to the organic metal salt is 100: (0.1 to 2).

In some embodiments, a solid content mass ratio of the lithium-rich iron-based core to the organic solvent is 5 wt% to 40 wt%.

Further, the lithium-rich iron-based core is mixed with an anhydrous organic solvent, and then the organic metal salt is slowly added. The slow addition method is conducive to metal ion extraction treatment. If it is directly mixed, the extraction preparation cannot be achieved.

In some embodiments, in the step of preparing the passivation layer by the metal ion extraction method, the metal ion extraction is performed by heat treatment, in which, a temperature of the heat treatment is 50°C to 80°C, and a time of the heat treatment is 2 hrs to 15 hrs.

In some embodiments, the preparation method of the iron-based cathode lithium-supplementing material further comprises: in an inert atmosphere, mixing the iron-based cathode lithium-supplementing material with a conductive material, and performing heat treatment at a temperature of 300°C to 400°C for 2 hrs to 6 hrs to prepare an encapsulation layer coated on a surface of the passivation layer.

In some embodiments, the preparation of the encapsulation layer adopts a semi-dehydration carbonization treatment on the carbon source provided. The specific preparation comprises: providing a carbon source under an inert atmosphere for semi-dehydration carbonization treatment to obtain a semi-carbonized carbon source. The semi-carbonized carbon source provided is a CxHy(OH)z structure. In such condition, the semi-carbonized carbon source retains a small part of the hydroxyl bonds and has a partial conductivity function. If the carbon source is completely carbonized, the amorphous carbon formed in such condition is a rigid brittle material, which is easily destroyed due to mechanical high-speed shearing in the subsequent high-speed fusion process, and it is difficult to provide a good coating effect. The toughness of the semi-carbonized carbon source is just right, which can provide a good coating effect and can improve the conductivity of the material.

In some embodiments, the inert atmosphere includes but is not limited to a nitrogen atmosphere, a helium atmosphere, and a neon atmosphere.

In some embodiments, the temperature of the semi-dehydration carbonization treatment is 300°C to 400°C, and the time is 2 hrs to 6 hrs. Based on the inert atmosphere, the treatment at this temperature can ensure that the carbon source is semi-dehydrated and semi-carbonized to obtain a semi-carbonized carbon source.

In some embodiments, the carbon source comprises at least one of glucose, sucrose, and polyethylene glycol.

In some embodiments, the lithium-rich iron-based core comprising the passivation layer is fused with the semi-carbonized carbon source to obtain an encapsulation layer on the surface of the lithium-rich iron-based core comprising the passivation layer.

In some embodiments, the mass ratio of the lithium-rich iron-based core to the carbon source is 100: (10 to 20). By controlling the mass ratio of the lithium-rich iron-based core to the carbon source, it can be ensured that the carbon source effectively and completely encapsulates the lithium-rich iron-based core to obtain the encapsulation layer.

In some specific embodiments, the mass ratio of the lithium-rich iron-based core to the carbon source is 100:10, 100: 11, 100: 12, 100:13, 100:14, 100:15, 100:16, 100:17, 100:18, 100:19, and 100:20.

In some embodiments, the lithium-rich iron-based core comprising the passivation layer is fused with the semi-carbonized carbon source to obtain an encapsulation layer on the surface of the lithium-rich iron-based core comprising the passivation layer. Compared with the method of using a metal oxide encapsulation layer in the prior art, employing the fusion treatment to prepare the encapsulation layer can solve the problem of lithium ion migration kinetics caused by poor interface conductivity, and protect the lithium-rich iron-based core from contact with water vapor and carbon dioxide in the air before storage and assembly and packaging of the battery.

In some embodiments, an inert gas is provided during the fusion process to ensure that impurities are not introduced into the reaction system.

In some embodiments, the fusion treatment speed is 1500 rpm to 5000 rpm, and the time is 5 mins to 60 mins. In some specific embodiments, the fusion treatment speed includes but is not limited to 1500 rpm, 2000 rpm, 2500 rpm, 3000 rpm, 3500 rpm, 4000 rpm, 4500 rpm, and 5000 rpm. The fusion treatment time is 5 mins, 10 mins, 15 mins, 20 mins, 25 mins, 30 mins, 35 mins, 40 mins, 45 mins, 50 mins, 55 mins, and 60 mins.

A third aspect of embodiments of the present application provides a lithium-rich cathode. The lithium-rich cathode comprises: a cathode current collector, and a cathode active material layer located on the cathode current collector. The cathode active material layer comprises: a lithium-rich cathode active material, a binder, a conductive agent, and an iron-based cathode lithium-supplementing material. The iron-based cathode lithium-supplementing material is selected from an iron-based cathode lithium-supplementing material or prepared by a preparation method of an iron-based cathode lithium-supplementing material.

The third aspect of the present application provides the lithium-rich cathode. The lithium-rich cathode comprises: the cathode current collector, and the cathode active material layer located on the cathode current collector. The cathode active material layer comprises: the lithium-rich cathode active material, the binder, the conductive agent, and the iron-based cathode lithium-supplementing material. The iron-based cathode lithium-supplementing material is selected from the iron-based cathode lithium-supplementing material or is prepared by the preparation method of the iron-based cathode lithium-supplementing material. Since the iron-based cathode lithium-supplementing material can effectively isolate harmful components, such as water and carbon dioxide, in the air, and effectively control the moisture resistance of the iron-based cathode lithium-supplementing material, it is ensured that the obtained lithium-rich cathode has good stability, and after being assembled to form a battery, the lithium-supplementing effect on the cathode of the battery can be achieved.

In some embodiments, the mass percentage of the iron-based cathode lithium-supplementing material in the cathode active layer is 0.1 wt% to15 wt%. In some specific embodiments, the mass percentage of the iron-based cathode lithium-supplementing material in the cathode active layer includes but is not limited to 0.1 wt%, 0.5 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, and 15 wt%.

In some embodiments, the cathode active layer further comprises a cathode active material. In some specific embodiments, the cathode active material includes but is not limited to at least one of lithium iron phosphate, lithium manganese iron phosphate, lithium nickel cobalt manganese oxide, lithium nickel manganese oxide, lithium cobalt oxide, and lithium manganese oxide.

In some embodiments, the cathode active layer further comprises a binder. The binder comprises at least one of polyvinylidene chloride, soluble polytetrafluoroethylene, styrene-butadiene rubber, hydroxypropyl methylcellulose, methylcellulose, carboxymethyl cellulose, polyvinyl alcohol, acrylonitrile copolymer, sodium alginate, chitosan, and chitosan derivatives.

In some embodiments, the mass percentage of the binder in the cathode active layer is 0.5 wt% to 5 wt%.

In some embodiments, the cathode active layer further comprises a conductive agent. The conductive agent comprises at least one of a graphite, a carbon black, an acetylene black, a graphene, a carbon fiber, and a carbon nanotube.

In some embodiments, a mass percentage of the conductive agent in the cathode active layer is 0.1 wt% to 10 wt%.

Embodiments of the present application provide a secondary battery, and the secondary battery comprises a lithium-rich cathode.

The fourth aspect of embodiments of the present application provides a secondary battery, which comprises a lithium-rich cathode, and the lithium-rich cathode comprises an iron-based cathode lithium-supplementing material, ensuring that before packaging to form a secondary battery, the cathode lithium-supplementing material in the cathode plate is not affected by water vapor and carbon dioxide in the air, so that the lithium ions in the assembled secondary battery system are stable, the overall electrochemical performance of the battery is improved, thus having good cycle performance and lithium-supplementing performance, and being conducive to widespread use.

The following is an explanation in conjunction with specific examples.

### Example A1

### Iron-based cathode lithium-supplementing material and preparation thereof

The provided iron-based cathode lithium-supplementing material comprises: a lithium-rich iron-based core, a passivation layer, and an encapsulation layer coated on a surface of the lithium-rich iron-based core. The structural formula of the lithium-rich iron-based core is Li_{4.96}Fe_{0.99}O_{3.965}·0.005NiO, the passivation layer is 0.01LiFeO₂·0.01LiAlO₂, and a material of the encapsulation layer is selected from a semi-finished carbon layer containing hydroxyl groups.

The preparation method was performed as follows:
① Preparation of lithium peroxide: hydrogen peroxide/anhydrous lithium hydroxide were stirred and mixed in a molar ratio of 1.1:1, a reaction temperature was 100°C, and a reaction time was 30 mins. Then a certain amount of anhydrous ethanol was added to the reactor. A volume ratio of anhydrous ethanol to hydrogen peroxide was 1.2. Finally, a lithium peroxide precipitate with crystal water was obtained. The crystals were roasted at 420°C for 5 hrs to remove the crystal water whereby obtaining Li₂O₂.
② According to a stoichiometric ratio in the structural formula of Li_{4.98}FeO_{3.99}·0.005NiO, Fe(NO₃)₃, LiNO₃, Li₂O₂, and Ni(NO₃)₂ were provided in a molar ratio of 1:2:1.49:0.005 and performed with high-speed shear mixing to obtain a precursor.
③ In a nitrogen atmosphere, the precursor was transferred to a corundum sagger, and the precursor was heated to 850°C at a heating rate of 300°C/hr and such temperature was preserved for 15 hrs. After cooling, a product was mechanically crushed and graded to obtain Li_{4.98}FeO_{3.99}·0.005NiO lithium-rich iron-based core.
④ The above Li_{4.98}FeO_{3.99}·0.005NiO was added to an anhydrous ethanol solution dispersed with aluminum nitrate according to a ratio of Li_{4.98}FeO_{3.99}·0.005NiO to the Al source of 1:0.01; then heated to a temperature of 80°C, stirred for 2 hrs, and dried. A powder was heated to 780°C at a heating rate of 100°C/hr and such temperature was preserved for 10 hrs whereby obtaining a mixture having the core being Li_{4.96}Fe_{0.99}O_{3.965}·0.005NiO and the passivation layer being 0.01LiFeO₂·0.01LiAlO₂.
   Glucose was collected at a ratio of 20 wt% of the above powder, heated to 350°C in a nitrogen atmosphere for 5 hrs to obtain a semi-carbonized carbon source.
⑤ Under a nitrogen atmosphere, the lithium-rich iron-based core was fused with the semi-carbonized carbon source at a fusion speed of 2000 rpm and a fusion time of 30 mins, such that an encapsulation layer was formed on a surface of the lithium-rich iron-based core, and an iron-based cathode lithium-supplementing material was obtained.

It was known from testing that the core was Li_{4.96}Fe_{0.99}O_{3.965}·0.005NiO, the passivation layer was 0.01LiFeO₂·0.01LiAlO₂, the outer layer was the semi-carbonized carbon source, an average particle size of the powder was 6.9 µm, a thickness of the carbon encapsulation layer was 62 nm, and a BET specific surface area was 2.1 m²/g.

### Example A2

### Iron-based cathode lithium-supplementing material and preparation thereof

The provided iron-based cathode lithium-supplementing material comprises: a lithium-rich iron-based core, a passivation layer, and an encapsulation layer coated on a surface of the lithium-rich iron-based core. The structural formula of the lithium-rich iron-based core is Li_{4.96}Fe_{0.99}O_{3.965}·0.005NiO, the passivation layer is 0.01LiFeO₂·0.01LiTiO₂, and a material of the encapsulation layer is selected from a semi-finished carbon layer containing hydroxyl groups.

The preparation method was performed as follows:
① Preparation of lithium peroxide: hydrogen peroxide/anhydrous lithium hydroxide were stirred and mixed in a molar ratio of 1.1:1, a reaction temperature was 100°C, and a reaction time was 30 mins. Then a certain amount of anhydrous ethanol was added to the reactor. A volume ratio of anhydrous ethanol to hydrogen peroxide was 1.2. Finally, a lithium peroxide precipitate with crystal water was obtained. The crystals were roasted at 420°C for 5 hrs to remove the crystal water whereby obtaining Li₂O₂.
② According to a stoichiometric ratio in the structural formula of Li_{4.98}FeO_{3.99}·0.005NiO, Fe(NO₃)₃, LiNO₃, Li₂O₂, and Ni(NO₃)₂ were provided in a molar ratio of 1:2:1.49:0.005 and performed with high-speed shear mixing to obtain a precursor.
③ In a nitrogen atmosphere, the precursor was transferred to a corundum sagger, and the precursor was heated to 850°C at a heating rate of 300°C/hr and such temperature was preserved for 15 hrs. After cooling, a product was mechanically crushed and graded to obtain Li_{4.98}FeO_{3.99}·0.005NiO lithium-rich iron-based core.
④ The above Li_{4.98}FeO_{3.99}·0.005NiO was added to an anhydrous ethanol solution dispersed with tetrabutyl titanate according to a ratio of Li_{4.98}FeO_{3.99}·0.005NiO to the Ti source of 1:0.01; then heated to a temperature of 60°C, stirred for 2 hrs, and dried. A powder was heated to 780°C at a heating rate of 100°C/hr and such temperature was preserved for 10 hrs whereby obtaining a mixture having the core being Li_{4.96}Fe_{0.99}O_{3.965·}0.005NiO and the passivation layer being 0.01LiFeO₂·0.01LiTiO₂. Glucose was collected at a ratio of 20 wt% of the above powder, heated to 350°C in a nitrogen atmosphere for 5 hrs to obtain a semi-carbonized carbon source.
⑤ Under a nitrogen atmosphere, the lithium-rich iron-based core was fused with the semi-carbonized carbon source at a fusion speed of 2000 rpm and a fusion time of 30 mins, such that an encapsulation layer was formed on a surface of the lithium-rich iron-based core, and an iron-based cathode lithium-supplementing material was obtained.

It was known from testing that the core was Li_{4.96}Fe_{0.99}O_{3.965·}0.005NiO, the passivation layer was 0.01LiFeO₂·0.01LiTiO₂, the outer layer was the semi-carbonized carbon source, an average particle size of the powder was 6.5 µm, a thickness of the carbon encapsulation layer was 48 nm, and a BET specific surface area was 1.7 m²/g.

### Example A3

The passivation layer contains 0.01LiFeO₂·0.01Li₃PO₄.

### Example A4

The passivation layer contains 0.01LiFeO₂·0.01Li₂SiO₃.

### Example A5

The passivation layer contains 0.01LiFeO₂·0.01LiVO₃.

### Example A6

The passivation layer contains 0.01LiFeO₂·0.01Li₂MnO₃.

### Comparative Example A1

The preparation method was performed as follows:
① Preparation of lithium peroxide: hydrogen peroxide/anhydrous lithium hydroxide were stirred and mixed in a molar ratio of 1.1:1, a reaction temperature was 100°C, and a reaction time was 30 mins. Then a certain amount of anhydrous ethanol was added to the reactor. A volume ratio of anhydrous ethanol to hydrogen peroxide was 1.2. Finally, a lithium peroxide precipitate with crystal water was obtained. The crystals were roasted at 420°C for 5 hrs to remove the crystal water whereby obtaining Li₂O₂.
② According to a stoichiometric ratio in the structural formula of Li_{4.98}FeO_{3.99}·0.005NiO, Fe(NO₃)₃, LiNO₃, Li₂O₂, and Ni(NO₃)₂ were provided in a molar ratio of 1:2:1.49:0.005 and performed with high-speed shear mixing to obtain a precursor.
③ In a nitrogen atmosphere, the precursor was transferred to a corundum sagger, and the precursor was heated to 850°C at a heating rate of 300°C/hr and such temperature was preserved for 15 hrs. After cooling, a product was mechanically crushed and graded to obtain Li_{4.98}FeO_{3.99}·0.005NiO lithium-containing compound.

It was known from testing that an average particle size of Li_{4.98}FeO_{3.99}·0.005NiO powder was 5.9 µm, and a BET specific surface area was 2.5m2/g.

### Comparative Example A2

① Preparation of lithium peroxide: hydrogen peroxide/anhydrous lithium hydroxide were stirred and mixed in a molar ratio of 1.1:1, a reaction temperature was 100°C, and a reaction time was 30 mins. Then a certain amount of anhydrous ethanol was added to the reactor. A volume ratio of anhydrous ethanol to hydrogen peroxide was 1.2. Finally, a lithium peroxide precipitate with crystal water was obtained. The crystals were roasted at 420°C for 5 hrs to remove the crystal water whereby obtaining Li₂O₂.
② According to a stoichiometric ratio in the structural formula of Li_{4.98}FeO_{3.99}·0.005NiO, Fe(NO₃)₃, LiNO₃, Li₂O₂, and Ni(NO₃)₂ were provided in a molar ratio of 1:2:1.49:0.005 and performed with high-speed shear mixing to obtain a precursor.
③ In a nitrogen atmosphere, the precursor was transferred to a corundum sagger, and the precursor was heated to 850°C at a heating rate of 300°C/hr and such temperature was preserved for 15 hrs. After cooling, a product was mechanically crushed and graded to obtain Li_{4.98}FeO_{3.99}·0.005NiO lithium-rich iron-based core.
④ Glucose was collected at a ratio of 20 wt% of the above powder, heated to 350°C in a nitrogen atmosphere for 5 hrs to obtain a semi-carbonized carbon source.
⑤ Under a nitrogen atmosphere, the lithium-rich iron-based core Li_{4.98}FeO_{3.99}·0.005NiO was fused with the semi-carbonized carbon source at a fusion speed of 2000 rpm and a fusion time of 30 mins, such that an encapsulation layer was formed on a surface of the lithium-rich iron-based core, and an iron-based cathode lithium-supplementing material was obtained.

It was known from testing that the core was Li_{4.98}FeO_{3.99·}0.005NiO, the outer layer was the semi-carbonized carbon source, an average particle size of the powder was 6.4 µm, a thickness of the carbon encapsulation layer was 57 nm, and a BET specific surface area was 2.6 m²/g.

### Example B1-B6

### Cathode plate and lithium-ion battery

Cathode plate: each iron-based cathode lithium-supplementing material of Examples A1-A6 was mixed with polyvinylidene fluoride and SP-Li in a mass ratio of 90:5:5, and ball milled and stirred to obtain the cathode slurry. The cathode slurry was coated on a surface of an aluminum foil, which was then rolled, and vacuum dried overnight at 110°C to obtain a cathode plate;
Anode: lithium metal plate;
Electrolyte: ethylene carbonate and ethyl methyl carbonate were mixed in a volume ratio of 3:7, and LiPF₆ was added to form an electrolyte, in which, the concentration of LiPF₆ was 1 mol/L.
Separator: polypropylene microporous separator.
Assemblage of lithium-ion battery: the lithium-ion batteries of Examples B1-B6 were assembled in an inert atmosphere glove box in an assembly order of lithium metal plate-separator-electrolyte-cathode plate to obtain.

### Comparative Example B1-Comparative Example B2

### Cathode plate and lithium-ion battery

Cathode plate: each iron-based cathode lithium-supplementing material of Comparative Examples A1-A4 was mixed with polyvinylidene fluoride and SP-Li in a mass ratio of 90:5:5, and ball milled and stirred to obtain the cathode slurry. The cathode slurry was coated on a surface of an aluminum foil, which was then rolled, and vacuum dried overnight at 110°C to obtain a cathode plate;
Anode: lithium metal plate;
Electrolyte: ethylene carbonate and ethyl methyl carbonate were mixed in a volume ratio of 3:7, and LiPF₆ was added to form an electrolyte, in which, the concentration of LiPF₆ was 1 mol/L.
Separator: polypropylene microporous separator.
Assemblage of lithium-ion battery: the lithium-ion batteries of Comparative Examples B1-B2 were assembled in an inert atmosphere glove box in an assembly order of lithium metal plate-separator-electrolyte-cathode plate to obtain.

### Performance test

(I) According to the preparation processes of Examples A1-A6 and Comparative Examples A1-A2, the water absorption rates of the products were observed; the adsorption rate evaluation method was performed as follows:
   ① Under standard atmospheric pressure, a room temperature was controlled at 25°C and the relative humidity was controlled at 20% to 25%;
   ② 0.3 g to 0.5 g of a sample was taken out from a glove box, one sample was taken for each time, and after the test, a next sample was taken from the glove box;
   ③ a weighing bottle was placed in an analytical balance having an accuracy of one hundred thousandth, a hatch was closed, and data was reset to zero; and
   ④ 0.17 g to 0.19 g of the sample to be tested was collected and placed in a container, and the material was spread by a spoon to make a spread area as thin and uniform as possible to ensure that a test area does not affect the water absorption rate of the material, then the hatch was closed, a timer was turned on after stabilizing for 3 s to 5 s, and a mass weighted by the analytical balance was recorded as a value at 0 min. Next, the values at 5 mins, 10 mins, 15 mins, and 20 mins were recorded, respectively. An average absorption data at 10 mins to 20 mins were calculated, and the water absorption rates of the lithium-rich iron-based core containing the encapsulation layer were calculated.
(II) The electrochemical performance of the lithium-ion batteries of Example B1 to Example B6 and the lithium-ion batteries of Comparative Examples B1 and B2 were tested. The test conditions were as follows: the assembled batteries were placed at room temperature for 24 hrs and then charged and discharged. The charge and discharge voltage was 2.7 V to 4.3 V

### Result analysis

(I) According to the preparation processes of Examples A1 to A6 and Comparative Examples A1 to A2, the water absorption rates and relative humidities % of the products were observed. As shown in Table 1, it can be seen that the samples provided by Examples A1 to A6 all comprised a passivation layer, and when the relative humidity is 30%, the water absorption rates of the samples provided by Examples A1 to A6 were 0.9 Ppm/s, 1.1 Ppm/s, 0.5 Ppm/s, 0.8 Ppm/s, 0.7 Ppm/s, and 0.4 Ppm/s, respectively. In contrast, the samples provided by Comparative Examples A1 and A2 did not comprise a passivation layer, and when the relative humidity is 30%, the water absorption rates of the samples provided by Comparative Examples A1 and A2 were 13.1 Ppm/s and 7.9 Ppm/s, respectively. It can be seen that the passivation layer played a vital role in stabilizing the stability of the interface, and greatly reduced the sensitivity to the adsorption of moisture in the air.

**Table 1**

| Sample | Passivation layer | Water absorption rate Ppm/s | Relative humidity % |
|---|---|---|---|
| Example A1 | 0.01LiFeO₂·0.01LiAlO₂ | 0.9 | 30 |
| Example A2 | 0.01LiFeO₂·0.01LiTiO₂ | 1.1 | 30 |
| Example A3 | 0.01LiFeO₂·0.01Li₃PO₄ | 0.5 | 30 |
| Example A4 | 0.01LiFeO₂·0.01Li₂SiO₃ | 0.8 | 30 |
| ExampleA5 | 0.01LiFeO₂·0.01LiVO₃ | 0.7 | 30 |
| ExampleA6 | 0.01LiFeO₂·0.01Li₂MnO₃ | 0.4 | 30 |
| Comparative Example A1 | No passivation layer, no carbon layer | 13.1 | 30 |
| Comparative Example A2 | No passivation layer, with carbon layer | 7.9 | 30 |

(II) The electrochemical properties of the lithium ion batteries of Examples B1 to B6 and the lithium ion batteries of Comparative Examples B1 and B2 were tested. The results were shown in Table 2. It can be seen that the initial charge specific capacities of the lithium ion batteries of Examples B1 to B6 at 0 hr were 679 mAh/g, 667 mAh/g, 674 mAh/g, 695 mAh/g, 682 mAh/g, and 679 mAh/g, respectively; and the initial charge specific capacities of the lithium ion batteries of Examples B1 to B6 at 24 hrs were 657 mAh/g, 652 mAh/g, 661 mAh/g, 650 mAh/g, 662 mAh/g, and 652 mAh/g, respectively; in contrast, the initial charge specific capacities of the lithium ion batteries of Comparative Examples B1 and B2 at 0 hr were 252 mAh/g, 469 mAh/g, respectively, and the initial charge specific capacities of the lithium ion batteries of Comparative Examples B1 and B2 at 24 hrs were 45 mAh/g and 230 mAh/g, respectively. It can be seen that the iron-based cathode lithium-supplementing material prepared by the preparation method of the iron-based cathode lithium-supplementing material provided in the present application can better improve the electrochemical performance of the lithium-ion battery when assembled into a battery for use.

**Table 2**

| Sample | Initial charge specific capacity at 0 hr (mAh/g) | Initial charge specific capacity at 24 hrs (mAh/g) |
|---|---|---|
| Example B1 | 679 | 657 |
| Example B2 | 667 | 652 |
| Example B3 | 674 | 661 |
| Example B4 | 659 | 650 |
| Example B5 | 682 | 662 |
| Example B6 | 679 | 652 |
| Comparative Example B1 | 252 | 45 |
| Comparative Example B2 | 469 | 230 |

The above are only optional embodiments of the present application and are not intended to limit the present application. For those skilled in the art, the present application may have various changes and variations. Any modification, equivalent replacement, improvement, etc. made within the spirit and principle of the present application should be included in the scope of the claims of the present application.

## Claims

1. An iron-based cathode lithium-supplementing material, **characterized in that** the iron-based cathode lithium-supplementing material comprises: a lithium-rich iron-based core, and a passivation layer coated on a surface of the lithium-rich iron-based core, wherein a material of the passivation layer comprises LiFeO₂ and Li_{d}MOₑ, wherein d and e satisfy d≥2e-5, and the M is selected from at least one element of Al, Ni, Mn, Co, Ti, Zr, Si, V, Zn, Cr, Cu, and P.

2. The iron-based cathode lithium-supplementing material according to claim 1, wherein a structural formula of the lithium-rich iron-based core is LiₐFeO_{b}·cMₓO_{y}, wherein in the structural formula, c is a mole number, 4.5≤a≤5.5; a and b satisfy a formula of a=2b-3; 1≤y/x≤2.5; and M is selected from at least one element of Al, Ni, Mn, Co, Ti, Zr, Si, V, Zn, Cr, and Cu.

3. The iron-based cathode lithium-supplementing material according to claim 1 or 2, wherein
in the passivation layer, LiFeO₂ and the Li_{d}MOₑ are uniformly mixed to form a passivation layer structure; or
in the passivation layer, LiFeO₂ forms a first passivation layer coated on the surface of the lithium-rich iron-based core, and Li_{d}MOₑ forms a second passivation layer coated on a surface of the first passivation layer.

4. The iron-based cathode lithium-supplementing material according to any one of claims 1-3, wherein the iron-based cathode lithium-supplementing material further comprises: an encapsulation layer coated on a surface of the passivation layer; wherein a material of the encapsulation layer comprises a conductive material.

5. The iron-based cathode lithium-supplementing material according to claim 4, wherein the conductive material is selected from a semi-finished carbon layer containing hydroxyl groups.

6. The iron-based cathode lithium-supplementing material according to claim 5, wherein a structural formula of the semi-finished carbon layer is C_{f}H_{g}(OH)ₕ; wherein 0<f<6, 0<g<3, and 0<h<4.

7. The iron-based cathode lithium-supplementing material according to any one of claims 4-6, wherein a thickness of the encapsulation layer is 2 nm to 150 nm.

8. The iron-based cathode lithium-supplementing material according to any one of claims 1-7, wherein a particle size of the lithium-rich iron-based core is 2 µm to 30 µm.

9. The iron-based cathode lithium-supplementing material according to any one of claims 1-8, wherein a thickness of the passivation layer is 2 nm to 150 nm.

10. The iron-based cathode lithium-supplementing material according to any one of claims 1-9, wherein a water absorption rate of the iron-based cathode lithium-supplementing material is 0 ppm/s to 50 ppm/s.

11. A preparation method of an iron-based cathode lithium-supplementing material, **characterized by** comprising the following steps:
preparing lithium peroxide;
according to a stoichiometric ratio of elements in a structural formula of LiₐFeO_{b}·cMₓO_{y}, evenly mixing an iron source, a lithium source, and a doping metal source to obtain a precursor, wherein in the structural formula, c is a mole number, 4.5≤a≤5.5; a and b satisfy a formula a=2b-3; 1≤y/x≤2.5; and M is selected from at least one element of Al, Ni, Mn, Co, Ti, Zr, Si, V, Zn, Cr, and Cu;
subjecting the precursor to a semi-liquid phase sintering process to obtain a lithium-rich iron-based core; and
mixing the lithium-rich iron-based core with an anhydrous organic solvent, slowly adding an organic metal salt, and preparing a passivation layer by a metal ion extraction method to obtain the iron-based cathode lithium-supplementing material.

12. The preparation method of the iron-based cathode lithium-supplementing material according to claim 11, wherein in the step of preparing the passivation layer by the metal ion extraction method, the metal ion extraction is performed by heat treatment, wherein a temperature of the heat treatment is 50°C to 80°C, and a time of the heat treatment is 2 hrs to 15 hrs.

13. The preparation method of the iron-based cathode lithium-supplementing material according to claim 11 or 12, wherein the anhydrous organic solvent is selected from at least one of anhydrous ethanol, methanol, tetrahydrofuran, N-methylpyrrolidone, and cyclohexane.

14. The preparation method of the iron-based cathode lithium-supplementing material according to any one of claims 11-13, wherein the organic metal salt is selected from at least one of an alkane salt, an acetate salt, a lactate salt, a citrate salt, a tartrate salt, an alcohol salt, and a tetrabutyl titanate salt.

15. The preparation method of the iron-based cathode lithium-supplementing material according to any one of claims 11-14, wherein the lithium source further comprises at least one of lithium nitrate, lithium carbonate, lithium acetate, lithium oxalate, lithium borate, lithium phosphate, lithium chloride, lithium hydroxide, lithium peroxide, and lithium oxide.

16. The preparation method of the iron-based cathode lithium-supplementing material according to any one of claims 11-15, wherein the iron source comprises an iron salt.

17. The preparation method of the iron-based cathode lithium-supplementing material according to any one of claims 11-16, wherein the doping element source comprises at least one of an Al source, a Ni source, a Mn source, a Co source, a Ti source, a Zr source, a Si source, a V source, a Zn source, a Cr source, a Cu source, and a P source.

18. The preparation method of the iron-based cathode lithium-supplementing material according to any one of claims 11-17, wherein a molar ratio of the lithium-rich iron-based core to the organic metal salt is 100: (0.1 to 2).

19. The preparation method of the iron-based cathode lithium-supplementing material according to any one of claims 11-18, wherein a solid content mass ratio of the lithium-rich iron-based core to the organic solvent is 5 wt% to 40 wt%.

20. The preparation method of the iron-based cathode lithium-supplementing material according to any one of claims 11-19, wherein the preparation method of the iron-based cathode lithium-supplementing material further comprises:
in an inert atmosphere, mixing the iron-based cathode lithium-supplementing material with a conductive material, and performing heat treatment at a temperature of 300°C to 400°C for 2 hrs to 6 hrs to prepare an encapsulation layer coated on a surface of the passivation layer.

21. A lithium-rich cathode, **characterized in that**
the lithium-rich cathode comprises: a cathode current collector, and a cathode active material layer located on the cathode current collector;
the cathode active material layer comprises: a lithium-rich cathode active material, a binder, a conductive agent, and an iron-based cathode lithium-supplementing material;
wherein
the iron-based cathode lithium-supplementing material is selected from the iron-based cathode lithium-supplementing material according to any one of claims 1-8 or is prepared by the preparation of the iron-based cathode lithium-supplementing material according to any one of claims 9-14.

22. A secondary battery, **characterized in that** the secondary battery comprises the lithium-rich cathode according to claim 21.
